# EUROPEAN PATENT APPLICATION

(11) **EP 4 489 138 A1**
(43) Date of publication of application: **08.01.2025**
(21) Application number: 23763553.7
(22) Date of filing: 02.03.2023
(51) Int. Cl.: H01M 4/62, H01M 4/13, H01M 4/139, H01M 10/0562

(54) **SECONDARY BATTERY MIXTURE, SECONDARY BATTERY MIXTURE SHEET, SECONDARY BATTERY MIXTURE SHEET MANUFACTURING METHOD, AND SECONDARY BATTERY**

(30) Priority: 02.03.2022 JP 2022032054
(71) Applicant: DAIKIN INDUSTRIES, LTD., Osaka-shi, Osaka 530-0001 (JP)
(72) Inventor: INOUE, Ryo, Osaka-shi, Osaka 530-0001 (JP); YAMADA, Takaya, Osaka-shi, Osaka 530-0001 (JP); ATSUMO, Ken, Osaka-shi, Osaka 530-0001 (JP); SUI, Xianwei, Osaka-shi, Osaka 530-0001 (JP); HIRAGA, Kentarou, Osaka-shi, Osaka 530-0001 (JP)
(74) Representative: Hoffmann Eitle
(86) International application number: PCT/JP2023/007903
(87) International publication number: WO 2023/167296

(57) **Abstract**

Provided are a secondary battery mixture that has good properties in terms of strength and battery performance, a secondary battery mixture sheet containing the mixture, and a secondary battery using the secondary battery mixture sheet. The secondary battery mixture includes a fibrillatable resin and particles A having a particle size of 20 µm or more. The secondary battery mixture contains on average 80 or more of the particles A per 1 mm³ of the mixture.

## Description

### Technical Field

The present disclosure relates to a secondary battery mixture, a secondary battery mixture sheet, a production method of a secondary battery mixture sheet, and a secondary battery.

### Background Art

For a lithium ion secondary battery, it is common to produce a secondary battery sheet by coating a slurry obtained by mixing a binder and a solvent on an electrode active material and a conductive aid and then drying.

Meanwhile, fibrillatable resins that readily forms fibrils, such as polytetrafluoroethylene resins, are known. This is also used as a binder by fibrillating the resin.

Patent Literature 1 to 2 disclose a method for producing an electrode in which polytetrafluoroethylene is fibrillated by subjecting a mixture including an active material and a polytetrafluoroethylene mixed binder material to a high shear treatment.

### Citation List

### Patent Literature

Patent Literature 1: Japanese Translation of PCT International Application Publication No. 2020-501338
Patent Literature 2: Japanese Translation of PCT International Application Publication No. 2021-519495

### Summary of Invention

### Technical Problem

An object of the present disclosure is to provide a secondary battery mixture which has good properties in terms of strength and battery performance, a secondary battery mixture sheet containing the mixture, and a secondary battery using the secondary battery mixture sheet.

Another object of the present disclosure is to provide a method for producing a secondary battery mixture sheet containing a polytetrafluoroethylene resin having a fine fiber structure.

### Solution to Problem

The present disclosure relates to a secondary battery mixture containing:
a fibrillatable resin; and
particles A having a particle size of 20 µm or more, wherein
the secondary battery mixture contains on average 80 or more of the particles A per 1 mm³ of the mixture.
It is preferred that the particles A are at least one selected from the group consisting of an electrode active material, a solid-state electrolyte, a carbon material, and a non-fibrillatable resin.

It is preferred that the particles A account for 1 to 4,800% by volume relative to the fibrillatable resin.

It is preferred that the secondary battery mixture further include particles B having a particle size of 0.5 µm or more and less than 20 µm, wherein
the secondary battery mixture contains 80,000 or more particles B per 1 mm³ of the mixture.

It is preferred that the particles B are at least one selected from the group consisting of an electrode active material, a solid-state electrolyte, a carbon material, and a non-fibrillatable resin.

It is preferred that the particles B account for 400 to 50,000% by volume relative to the fibrillatable resin.

It is preferred that the particles A are fewer than the particles B by volume ratio.

It is preferred that the fibrillatable resin is a polytetrafluoroethylene resin.

It is preferred that the polytetrafluoroethylene resin has a fibrous structure with a fibril diameter (median value) of 100 nm or less.

It is preferred that the secondary battery mixture is substantially free of a liquid medium.

The present disclosure also relates to a secondary battery mixture sheet including the secondary battery mixture.

The present disclosure also relates to a method for producing a secondary battery mixture sheet including:
a step (1) of applying a shear force while mixing a raw material composition including a fibrillatable resin and battery material particles having a d50 of 20 µm or more;
a step (2) of forming the secondary battery mixture obtained in step (1) into a bulk shape; and
a step (3) of rolling the bulk-shape secondary battery mixture obtained in step (2) into a sheet shape,
wherein 3% by mass or more of the battery material particles relative to the fibrillatable resin is used.

It is preferred that the method for producing a secondary battery mixture sheet includes, prior to the step (1), a step (0) of mixing a raw material at a temperature of 19°C or lower.

The present disclosure also relates to a secondary battery including the secondary battery mixture sheet.

### Advantageous Effects of Invention

In the present disclosure, by using a fibrillatable resin as a binder, a secondary battery mixture sheet containing a polytetrafluoroethylene resin having a fine fiber structure can be easily produced, and a sheet having excellent physical performance that can be handled without using a support can be produced with high productivity.

### Description of Embodiment(s)

The present disclosure will now be described in detail.

The present disclosure provides a secondary battery mixture that can be suitably used in a secondary battery, and a mixture sheet containing the same.

In the secondary battery mixture of the present disclosure and the mixture sheet containing the same, a fibrillatable resin is used as a binder. For a conventional secondary battery mixture, a common method to prepare the secondary battery mixture is to use a resin that dissolves in a solvent, such as a copolymer of vinylidene fluoride and hexafluoropropylene, as a binder, and coat and dry a slurry containing such a binder.

On the other hand, it is known that when shear stress is applied to PTFE in a particulate state, for example, the PTFE readily forms fibrils. By using such a fibrillatable resin as the binder, the fibrillated resin can entangle other powder components and the like to bind the powder components, and thereby act as a binder upon forming of the powder components.

In the present disclosure, the fibrillatable resin is a resin that readily forms fibrils when a shear stress is applied to the fibrillatable resin. Examples of the fibrillatable resin include a LCP, cellulose, acrylic resin, ultra-high molecular weight polyethylene, PTFE, and the like. Among them, PTFE is preferred in terms of chemical stability, thermal stability, and processability.

However, even when a fibrillated resin is used as a binder, if the fibrillation is not sufficient, a good performance cannot be achieved when used as a secondary battery mixture. In particular, to obtain physical strength, it is necessary to achieve efficient fibrillation.

As described above, Patent Literature 1 and Patent Literature 2 disclose producing a secondary battery mixture using polytetrafluoroethylene as a binder resin.

In Patent Literature 1, an electrode mixture is produced by using polytetrafluoroethylene as a binder resin and adding five times as much solvent as other components to prepare a paste. Therefore, a solvent drying step is required. Further, problems such as deterioration of battery performance due to solvent residue and deterioration of battery materials due to chemical reactions with the solvent occur.

In Patent Literature 2, an electrode mixture is produced by combining polytetrafluoroethylene and a non-fibrillated resin as a binder material. In order to maintain the strength of the film, 4% of the weight of the binder material is included to ensure the strength of the electrode. However, none of these techniques is sufficient to solve the above-described problems.

The present disclosure solves the above-described problems by using particles A having a particle size of 20 µm or more in the electrode mixture. That is, fibrillation occurs efficiently when the fibrillatable resin comes into contact with the particles A having a large particle size when subjected to a shear force. As a result, the effect of fibrillation can be fully obtained, and a secondary battery mixture and a secondary battery mixture sheet that have excellent properties can be obtained.

In the present disclosure, the PTFE resin is not limited, and may be a homopolymer or a copolymer that can be fibrillated.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

It is preferred that the fibrillatable resin serving as the raw material for preparing the secondary battery mixture of the present disclosure is in a powdered state, and that the powdered fibrillatable resin has a moisture content of 500 ppm or less.

Setting the moisture content to 500 ppm or less is preferable in terms of reducing deterioration in the battery materials.

More preferably, the moisture content is 300 ppm or less.

The above-described "powdered fibrillatable resin" means a solid state as a powder, not a dispersed state mixed with a liquid medium. The object of the present disclosure can be suitably achieved by producing a secondary battery mixture using the fibrillatable resin in such a state, which is a state in which a liquid medium is not present.

It is preferred that the powdered PTFE serving as the raw material for preparing the secondary battery mixture of the present disclosure has a standard specific gravity of 2.12 to 2.20. Having a standard specific gravity within the above range is advantageous in that a mixture sheet having a high strength can be produced. The lower limit of the standard specific gravity is more preferably not less than 2.13. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of polytetrafluoroethylene resin having a secondary particle size of 450 µm or more. When the PTFE having a secondary particle size of 450 µm or more is within the above range, there is an advantage that a high-strength mixture sheet can be produced.

By using PTFE with a secondary particle size of 450 µm or more, it is possible to obtain a mixture sheet with lower resistance and high toughness.

The lower limit of the average secondary particle size of the powdered PTFE is more preferably 450 µm, and further preferably 500 µm. The upper limit of the secondary particle size is more preferably not more than 700 µm, and further preferably not more than 600 µm. The secondary particle size can be determined, for example, by a sieving method.

The powdered PTFE has an average primary particle size of preferably 150 nm or more because this allows a mixture sheet having higher strength and excellent homogeneity to be obtained. More preferably, the average primary particle size is 180 nm or more, further preferably 210 nm or more, and particularly preferably 220 nm or more.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

In the secondary battery mixture of the present disclosure, the fibrillatable resin is preferably in a fibrillated state. That is, by fibrillating the fibrillatable resin, it is possible to achieve binding between the powder components constituting the electrode. Further, to obtain such an action as a binder, it is not necessary for the powder to be brought into contact with a liquid component. Therefore, another preferable point is that a secondary battery mixture sheet can be obtained without the problems caused by contact with liquid components occurring.

The secondary battery mixture of the present disclosure preferably has, as a constituent element, PTFE having a fibrous structure with a fibril diameter (median value) of 100 nm or less. Thus, by allowing PTFE with a small fibril diameter to be present in the secondary battery mixture, which acts to bind the powders of components constituting the secondary battery mixture, thereby exhibiting the effects of the present disclosure more favorably.

The fibril diameter (median value) is a value measured by the following method.
(1) Using a scanning electron microscope (Model S-4800, manufactured by Hitachi, Ltd.), an enlarged photograph (7,000x) of the secondary battery mixture sheet is taken to obtain an image.
(2) Two lines equidistant from each other are drawn on the image in the horizontal direction to divide the image into three equal parts.
(3) The diameter of each PTFE fiber on the upper straight line is measured at three locations, and the average value is taken as the PTFE fiber diameter. The three locations to be measured are the intersection between the PTFE fiber and the straight line, and the locations 0.5 µm above and below the intersection (PTFE primary particles not formed into fibrils are excluded).
(4) The task of (3) above is then carried out for all the PTFE fibers on the lower straight line.
(5) Starting from the first image, the sheet-shaped solid-state electrolyte layers is moved 1 mm in the right direction of the screen, photographed again, and the diameter of the PTFE fibers is measured according to the above (3) and (4). This is repeated until the number of fibers measured exceeded 80, and then the measurement is terminated.
(6) The median value of the diameters of all the PTFE fibers measured above was taken as the size of the fibril diameter.

The fibril diameter (median value) is preferably 100 nm or less, and more preferably 85 nm or less, and further preferably 70 nm or less. It should be noted that excessive fibril formation tends to result in loss of flexibility. Although the lower limit is not limited, from the viewpoint of strength, for example, the lower limit is preferably not less than 15 nm, more preferably not less than 20 nm, and further preferably not less than 31 nm.

Examples of the method for obtaining PTFE having the above-described fibril diameter (median value) include, but are not limited to a method including:
a step (1) of mixing a raw material composition including particles A and a binder and applying a shear force;
a step (2) of forming the secondary battery mixture obtained in step (1) into a bulk shape; and
a step (3) of rolling the bulk-shape secondary battery mixture obtained in step (2) into a sheet shape.

In the above steps, a step (0) may be performed as a mixing step to further improve the dispersibility of the material. For example, in step (0), the mixing conditions for the raw material composition are preferably 500 rpm or less, and more preferably 400 rpm or less. Further, by kneading at a temperature of 19°C or lower, the raw material composition can be dispersed while suppressing fibrillation.

In such a method, for example, by setting the mixing condition of the raw material composition to 15,000 rpm or less in step (1), the fibrillation of the PTFE can be advanced while maintaining flexibility, and by controlling the shear stress to be applied, the fibril diameter (median value) of the PTFE can be made 100 nm or less.

In the present disclosure, since particles having a particle size of 20 µm or more are included in a certain proportion, in particular fibrillation can be efficiently achieved. Therefore, even under the mixing conditions described above, it is possible to achieve good fibrillation even under milder mixing conditions than when there are no particles having a particle size of 20 µm or more.

Further, it is also preferable to have after the step (3) a step (4) of applying a larger load to the obtained roll sheet and rolling into a thinner sheet. It is also preferred to repeat step (4).

In addition, after the step (3) or step (4), the fibril diameter can be adjusted by having a step (5) of coarsely crushing the obtained roll sheet, then again forming into a bulk shape and rolling into a sheet. The step (5) is preferably repeated, for example, 1 or more times and 12 or less times.

The temperature conditions for the above steps (0) to (5) are such that in the above step (0), the processing temperature is preferably 19°C or lower, and in the above steps (1) to (5), the processing temperature is preferably 30°C or higher, and more preferably 60°C or higher. By using such a temperature range, it is possible to process the materials into a desired sheet shape in a shorter time.

That is, the secondary battery mixture can be produced by applying a shear force to fibrillate the PTFE powder, which becomes entangled with the powder components such as the active material and the solid-state electrolyte. This production method is described later.

In the secondary battery mixture of the present disclosure, as a proportion with respect to the total amount of the secondary battery mixture, the content of the fibrillatable resin is preferably 0.2% by mass or more, and more preferably 0.3% by mass or more. Further preferably, the content is more than 0.5% by mass. The upper limit of the binder content in the secondary battery mixture is preferably 10% by mass or less, more preferably 6.0% by mass or less, further preferably 4% by mass or less, still further preferably 1.7% by mass or less, and most preferably 1.0% by mass or less. If the fibrillatable resin proportion is too low, the active material cannot be retained sufficiently in the secondary battery mixture sheet, and the mechanical strength of the secondary battery mixture sheet is insufficient, which may cause a battery performance such as cycle characteristics to worsen. On the other hand, if the binder proportion is too high, this may lead to a decrease in battery capacity and electric conductivity.

The secondary battery mixture of the present disclosure contains on average 80 or more of the particles A having a particle size of 20 µm or more per 1 mm³ of the mixture. A part or all of the particles A having a particle size of 20 µm or more may be used as the particles of a component that acts as a battery material contributing to ion and electron conduction, or may be used as the particles of a component that does not act as a battery material. Specifically, the particles A having a particle size of 20 µm or more are preferably at least one selected from the group consisting of an electrode active material, a solid-state electrolyte, a carbon material, and a non-fibrillatable resin. There is no particular upper limit to the particle size of the particles A, but the upper limit may be not more than 250 µm.

Of these, in terms of improving battery performance, the case where the particles A are the particles of a component that acts as a battery material contributing to ion and electron conduction is preferable over the case where the particles are of a component that does not act as a battery material. Examples of such a component include a carbon material, an electrode active material, and a solid-state electrolyte. Further, as the particles A, two or more different components may be used.

The average number of the particles A contained per 1 mm³ of the mixture is more preferably 400 or more, and further preferably 800 or more. The upper limit is not limited, but it is more preferably not more than 160,000.

It is preferred that the secondary battery mixture of the present disclosure further contains, as particles B, particles having a size of 0.5 µm or more and less than 20 µm. It is preferable to use the particles B in addition to the particles A having a large particle size because when preparing a mixture sheet, the electrode density can be more easily improved by pressing, and battery resistance can be reduced.

It is preferred that the average number of the particles B is 80,000 or more per 1 mm³ of the mixture. More preferably, the average number is 500,000 or more, and further preferably 1,000,000 or more. The upper limit is not limited, but it is more preferably not more than 4 billion.

The number of the particles A and the particles B contained per 1 mm³ of the mixture can be counted from a 3D image of the mixture obtained by an X-ray CT scan, and was measured by the following method.

### [X-ray CT scan]

The X-ray CT scan for confirming the number of particles A and particles B was performed by acquiring a 3D image of the mixture and analyzing the image using analysis software.

The more specific method was as follows.

First, for the mixture before forming, a sample was weighed into a metal mold having a diameter of 10 mm, and a pressure of 12 KN was applied to form the mixture into pellets having a thickness of 1 mm or less. These were used as measurement samples. For the formed mixture sheet, the mixture sheet was cut to a size of at least 5 mm × 5 mm to prepare a measurement sample of at least 5 mm × 5 mm × 1 mm. When the thickness of a measurement sample was 1 mm or less, the measurement sample was made to have a thickness of 1 mm or more by overlapping the measurement samples.

Next, the measurement sample was placed in the sample fixing device of an X-ray CT scan (manufactured by Rigaku Co., Ltd., high-resolution 3D X-ray microscope nano3DX), and the center position of the sample and the focal length of the measurement X-ray were set to 20 mm. Finally, an area of 1 mm × 1 mm × 1 mm was scanned with an X-ray CT scan and analyzed using analysis software.

### [Confirmation of the average number of particles A]

The obtained images were saved on a computer in TIFF format, read with image analysis software ImageJ, and three-dimensionally reconstructed. After partial binarization of the portions having a similar contrast, the number of particles having a particle size of 20 µm or more present in an area of 500 µm × 500 µm × 500 µm was counted using the analyze particle function. The average number of particles per 125×10⁶ µm³ was calculated by counting the particles at 5 arbitrary non-overlapping areas. The average number of particles obtained here was multiplied by 8 to obtain the average number of particles per 1 mm³. The count detected particles having a major axis of 20 µm or more, and missed particles at the boundary of the measurement area. Particles having a particle size of less than 20 µm were not counted. Further, the average number of particles was rounded off to the nearest whole number.

### [Confirmation of the average number of particles B]

The obtained images were saved on a computer in TIFF format, read with image analysis software ImageJ, and three-dimensionally reconstructed. After partial binarization of the portions having a similar contrast, the number of particles having a particle size of 0.5 µm or more and less than 20 µm present in an area of 500 µm × 500 µm × 500 µm was counted using the analyze particle function. The average number of particles per 125×10⁶ µm³ was calculated by counting the particles at 5 arbitrary non-overlapping areas. The average number of particles obtained here was multiplied by 8 to obtain the average number of particles per 1 mm³. The count detected particles having a major axis of 0.5 µm or more and less than 20 µm, and missed particles at the boundary of the measurement area. Particles having a particle size of less than 0.5 µm were not counted. Further, the average number of particles was rounded off to the nearest whole number.

As used herein, "particle size" refers to the major axis, and if particles are aggregated, the particle size is determined for one particle based on the secondary particle size.

The particles A preferably account for 1 to 4,800% by volume relative to the fibrillatable resin. It is preferred that the content be within this range because fibrillation can be efficiently caused to occur. The lower limit is more preferably 5% by volume, and further preferably 10% by volume. The upper limit is more preferably 2,500% by volume, and further preferably 100% by volume.

The particles B preferably account for 400 to 50,000% by volume relative to the fibrillatable resin. It is preferred to set within this range because a high specific surface area in the mixture can be maintained and battery characteristics do not deteriorate. The lower limit is more preferably 800% by volume, and even more preferably 2,000% by volume. The upper limit is more preferably 10,000% by volume, further preferably 5,000% by volume, and particularly preferably 3,000% by volume.

In addition, the volume percentage of the particles A and the particles B can be measured by calculating the volume occupied by the fibrillatable resin, the particles A, and the particles B, respectively, in the space based on a three-dimensional image of the result obtained by the X-ray CT scan.

It is preferred the particles A are fewer than the particles B by volume ratio. Such a blending ratio is preferable in that fibrillation can be efficiently caused without a deterioration in battery characteristics. Specifically, the amount of the particles A relative to the particles B is preferably 10% by volume or less, and more preferably 3% by volume or less. The amount of the particles A relative to the particles B is preferably 0.2% by volume or more, and more preferably 0.5% by volume or more.

It is preferred that the particles A and the particles B are at least one selected from the group consisting of an electrode active material, a solid-state electrolyte, a carbon material, and a non-fibrillatable resin. Hereinafter, each of the components that can constitute the particles A and the particles B in the present disclosure will be specifically described.

### (Electrode active material)

When the secondary battery mixture sheet of the present disclosure is used as a sheet for a positive electrode, the secondary battery mixture sheet includes a positive electrode active material. As the positive electrode active material, a positive electrode active material known as a positive electrode active material for solid-state batteries can be employed. In particular, it is preferable to use a positive electrode active material capable of absorbing and desorbing lithium ions.

The positive electrode active material is not limited as long as it can electrochemically absorb and desorb alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
an alkali metal-manganese spinel composite oxide represented by the formula:

   MₐMn_{2-b}M¹_{b}O₄
wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
an alkali metal-nickel composite oxide represented by the formula:

   MNi_{1-c}M²cO₂
wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
an alkali metal-cobalt composite oxide represented by the formula:

   MCo_{1-d}M³_{d}O₂
wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕCoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g} (4)

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃ (where M is at least one metal selected from the group consisting of Li, Na and K) and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx [Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which LiNiO₂ or LiCoO₂ is dissolved as a solid solution in a base of Li₂MnO₃ is preferable from the viewpoint that an alkali metal ion secondary battery having a high energy density can be provided.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the solid-state electrolyte at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is lower than this lower limit, the amount of dispersion medium required for forming the positive electrode active material layer may increase, the required amounts of the conductive material and the fibrillatable resin may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. Although there is no upper limit, if the tapped density is too large, the diffusion of lithium ions in the positive electrode active material layer using the solid-state electrolyte as a medium becomes rate-determining, and the load characteristics tend to deteriorate. Therefore, the upper limit is preferably not more than 4.0 g/cm³, more preferably not more than 3.7 g/cm³, and further preferably not more than 3.5 g/cm³.

In the present disclosure, the tapped density is determined as the powder filling density (tapped density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance and the occurrence of streaks when forming the positive electrode of the battery, that is, when preparing a slurry of the active material, conductive material, binder, and the like with a solvent and coating the slurry as a thin film. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size of the positive electrode active material is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tapped density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNO₃ is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn is replaced with another transition metal or the like, or a combination of LiFePO₄ and LiCoO₂ or a material in which a part of the Co is replaced with another transition metal or the like.

From the viewpoint of a high battery capacity, the content of the positive electrode active material in the positive electrode mixture is preferably 50 to 99.5% by mass, and more preferably 80 to 99% by mass.

Further, the content of the positive electrode active material is preferably 80% by mass or more, more preferably 82% by mass or more, and particularly preferably 84% by mass or more. Further, the upper limit is preferably not more than 99% by mass, more preferably not more than 98% by mass. If the content of the positive electrode active material in the positive electrode mixture is low, the electric capacity may be insufficient. Conversely, if the content is too high, the strength of the positive electrode may be insufficient.

When using the secondary battery mixture sheet of the present disclosure as a negative electrode sheet, a negative electrode active material is incorporated in the secondary battery mixture sheet. Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly preferably used.

In order to increase the capacity of the obtained secondary battery mixture sheet, the content of the negative electrode active material in the secondary battery mixture sheet is preferably 40% by mass or more, more preferably 50% by mass or more, and particularly preferably 60% by mass or more. In addition, the upper limit is preferably 99% by mass or less, and more preferably 98% by mass or less.

### (Solid-state electrolyte)

The solid-state electrolyte may be a sulfide-based solid-state electrolyte or an oxide-based solid-state electrolyte. In particular, when a sulfide-based solid-state electrolyte is used, there is the advantage of flexibility.

The sulfide-based solid-state electrolyte is not limited, and may be selected from any of Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x = 0.6 to 0.8), Li_{4+y}Ge_{1-y}Ga_{y}S₄ (y = 0.2 to 0.3), LipSCI, LiCI, Li_{7-x-2y}PS_{6-x-y}Clₓ (0.8≤x≤1.7, 0<y≤-0.25x+0.5), and the like, or a mixture of two or more types can be used.

The sulfide-based solid-state electrolyte preferably contains lithium. Lithium-containing sulfide-based solid-state electrolytes are used in solid-state batteries that use lithium ions as carriers, and are particularly preferred for electrochemical devices having a high energy density.

The above-described oxide-based solid-state electrolyte is preferably a compound that contains an oxygen atom (O), has the ion-conducting property of a metal belonging to Group 1 or Group 2 of the Periodic Table, and has an electron insulating property.

Specific examples of the compounds include LiₓₐLa_{ya}TiO₃ [xa=0.3 to 0.7 and ya=0.3 to 0.7] (LLT), Li_{xb}La_{yb}Zr_{zb}M^{bb}_{mb}O_{nb} (M^{bb} is at least one or more elements of Al, Mg, Ca, Sr, V, Nb, Ta, Ti, Ge, In or Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}M^{cc}_{zc}O_{nc} (M^{cc} is at least one or more elements of C, S, Al, Si, Ga, Ge, In, or Sn, xc satisfies 0≤xc≤5, yc satisfies 0≤yc≤1, zc satisfies 0≤zc≤1, and nc satisfies 0≤nc≤6), Li_{xd}(Al, Ga)_{yd} (Ti, Ge)_{zd}Si_{ad}P_{md}O_{nd} (1≤xd≤3, 0≤yd≤2, 0≤zd≤2, 0≤ad≤2, 1≤md≤7, 3≤nd≤15), Li_{(3-2xc)}M^{ee}ₓₑD^{ee}O (xe represents a number of 0 or more and 0.1 or less, and M^{ee} represents a divalent metal atom; D^{ee} represents a halogen atom or a combination of two or more halogen atoms), Li_{xf}Si_{yf}O_{zf} (1≤xf≤5, 0≤yf≤3, 1≤zf≤10), Li_{xg}S_{yg}O_{zg} (1≤xg≤3, 0≤yg≤2, 1≤zg≤10) , Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w satisfies w<1), Li_{3.5}Zn_{0.25}GeO₄ having a lithium super ionic conductor (LISICON)-type crystal structure, La_{0.51}Li_{0.34}TiO_{2.94} or La_{0.55}Li_{0.35}TiO₃ having a perovskite-type crystal structure, LiTi₂P₃O₁₂ having a natrium super ionic conductor (NASICON) -type crystal structure, Li_{1+xh+yh} (Al, Ga)ₓₕ(Ti, Ge)₂₋ₓₕSi_{yh}P_{3-yh}O₁₂ (0≤xh≤1, 0≤yh≤1), Li₇La₃Zr₂O₁₂ (LLZ) having a garnet-type crystal structure. Further, ceramic materials obtained by substituting an element into the LLZ are also known. Examples of such ceramic materials include LLZ-based ceramic materials in which at least one of Mg (magnesium) and A (A is at least one element selected from the group consisting of Ca (calcium), Sr (strontium), and Ba (barium)) is substituted into the LLZ. Further, phosphorus compounds containing Li, P, and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like) , and the like. Further it is also possible to preferably use LiA¹ON (A¹ represents at least one element selected from Si, B, Ge, Al, C, Ga, or the like) and the like.

Specific examples include Li₂O-Al₂O₃-SiO₂-P₂O₅-TiO₂-GeO₂, Li₂O-Al₂O₃-SiO₂-P₂O₅-TiO₂, and the like.

The oxide-based solid-state electrolyte preferably contains lithium. Lithium-containing oxide-based solid-state electrolytes are used in solid-state batteries that use lithium ions as carriers, and are particularly preferred for electrochemical devices having a high energy density.

The oxide-based solid-state electrolyte is preferably an oxide having a crystal structure. Oxides having a crystal structure are particularly preferred in terms of having a good Li-ion-conducting property.

Examples of oxides having a crystal structure include perovskite type (La_{0.51}Li_{0.34}TiO_{2.94} etc.), NASICON type (Li_{1.3}Al_{0.3}Ti_{1.7} (PO₄)₃ etc.), garnet type (Li₇La₃Zr₂O₁₂ (LLZ), etc.), and the like. Among them, the NASICON type is preferable.

The volume average particle size of the oxide-based solid-state electrolyte is not limited, but is preferably 0.01 µm or more, and more preferably 0.03 µm or more. The upper limit is preferably not more than 100 µm, and more preferably not more than 50 µm. The average particle size of the oxide-based solid-state electrolyte particles is measured by the following procedure. A dispersion is prepared by diluting the oxide-based solid-state electrolyte particles with water (heptane for materials unstable in water) to 1% by mass in a 20 ml sample bottle. Ultrasonic waves of 1 kHz are applied on the diluted dispersion sample for 10 minutes, and the test is immediately carried out after that. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

In particular, when using as an electrode mixture sheet, components other than those described above may be added as necessary. Examples of such components include, in particular, a conductive aid. The conductive aid is not limited, and examples include a carbon material, a non-carbon conductive aid, and the like.

These are now described in detail below.

### (Carbon material)

Herein, "carbon material" refers to, in particular, a carbon-based material that is used as a battery material, and a publicly-known material may be used. Specific examples include carbon materials used as a conductive aid, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF.

### (Non-carbon conductive aid)

As the conductive aid, any known conductive material can be used. Specific examples include, in addition to the above-mentioned carbon materials, metal materials such as copper or nickel, and an electrically conductive polymer.

Examples of the electrically conductive polymer include a p-doped type electrically conductive polymer and an n-doped type electrically conductive polymer. Examples of the conductive polymer include polyacetylene-based polymers, polyphenylene-based polymers, heterocyclic polymers, ionic polymers, ladder and network polymers, and the like. One type of these may be used alone, or two or more types may be used in any combination or ratio.

The conductive aid is used such that it has a content in the electrode active material layer of usually 0.01% by mass or more, preferably 0.1% by mass or more, and more preferably 0.5% by mass or more, and usually 50% by mass or less, preferably 30% by mass or less, and more preferably 15% by mass or less. If the content is lower than this range, electric conductivity may be insufficient. Conversely, if the content is higher than this range, the battery capacity may decrease.

### (Non-fibrillatable resin)

The non-fibrillatable resin is a resin that does not correspond to the above-described fibrillatable resin, and does not fibrillate even when a shear force is applied.

Examples of the non-fibrillatable resin include polyvinylidene fluoride, polypropylene, polyethylene, polystyrene, polyethylene terephthalate, polyethylene oxide, and the like. One type may be used alone, or two or more types may be used in any combination and ratio.

### (aBattery mixture sheet)

The electrode mixture of the present disclosure can be formed into a sheet shape to form a secondary battery mixture sheet.

The secondary battery mixture sheet of the present disclosure can be a sheet for a positive electrode or a sheet for a negative electrode. Further, it can be a sheet for a solid-state electrolyte layer.

By appropriately selecting and combining the above-described electrode active material, solid-state electrolyte, carbon material, and non-fibrillatable resin, and other battery materials, a secondary battery mixture sheet suitable for each of the uses described above can be obtained.

### (Particle material)

As described above, the secondary battery mixture of the present disclosure contains a certain proportion or more of particles A having a particle size of 20 µm or more. The particles constituting the particles A having a particle size of 20 µm or more in this case may be any compounded component other than the above-described fibrillatable resin, and two or more components may constitute the particles A.

Further, it is preferred that the secondary battery mixture of the present disclosure also contains particles B having a particle size of 0.5 µm or more and less than 20 µm. In this case, the particles having a particle size of 20 µm or more and the particles having a particle size of 0.5 µm or more and less than 20 µm may each be prepared and used by mixing them, or a raw material containing both the particles A and the particles B in a certain distribution may be used.

In general, it is rare for the various types of particle-shaped substances to be sold or used only in the form of particles having a specific particle size. That is, in general, particle-shaped substances are usually sold or used in a state in which they have a certain particle size distribution. Therefore, as the secondary battery mixture of the present disclosure, is preferred to use a raw material that has such a certain particle size distribution, in which the area of that distribution includes both an area of the particles A having a particle size of 20 µm or more and an area of the particles B having a particle size of 0.5 µm or more and less than 20 µm. Further, in order to adjust the content of the particles A, two or more types of powders having different particle size distributions may be mixed and used. The secondary battery mixture of the present disclosure can be easily produced by measuring the particle size distribution of the material in advance and adjusting the amount to be added appropriately.

When the production method of the present disclosure, which will be described in detail below, is applied, it is possible to prevent the particle size distribution of the raw material and the particle size distribution of the electrode mixture from changing significantly. Therefore, it is preferred that the distribution of the powder components contained in the raw material is similar to the distribution of the particles of the intended electrode mixture.

For example, it is preferred to use, as a part of the powder components, 1% by mass or more, preferably 3% by mass or more, more preferably 5% by mass or more, and further preferably 7% by mass or more of battery material particles having a d50 of 20 µm or more with respect to the fibrillatable resin because it is possible to easily obtain the secondary battery mixture of the present disclosure that contains particles A in a specific proportion. The d50 is more preferably 20 µm or more, further preferably 23 µm or more, and particularly preferably 25 µm or more. The upper limit is not limited, but 100 µm is preferable.

The d50 described here is a value obtained by measuring in accordance with the method described in detail below, and is based on volume.

The d50 is measured using a known laser diffraction/scattering particle size distribution measurement apparatus. When the LA-920 manufactured by HORIBA is used as the particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

It is preferred that the electrode mixture is substantially free of a liquid medium. In the conventional method for producing a secondary battery mixture, it is common to prepare a slurry in which a powder, which is a component of the secondary battery mixture, is dispersed by using a solvent in which a binder is dissolved, and then prepare the solid-state secondary battery mixture sheet by coating and drying the slurry. In this case, a solvent for dissolving the binder is used. However, the solvents capable of dissolving the binder resin that have conventionally generally been used are limited to specific solvents such as butyl butyrate. Such solvents degrade the solid-state electrolyte, and cause a decrease in battery performance. In addition, low-polarity solvents such as heptane are very limited in terms of the types of binder resins that they can dissolve, and they have a low flash point, which can make them difficult to handle.

Further, in Patent Literature 1 and the like, a method of adding a solvent to form a paste and extruding is also described. However, using a solvent may cause problems such as deterioration of the battery characteristics due to degradation of the active material and degradation of the solid-state electrolyte. Moreover, since a step of drying and collecting the solvent is required, there may be a problem that cost benefits are reduced. In the present disclosure, it is particularly preferred that the forming be performed by fibrillating the fibrillatable resin while applying a shear force in a solvent-free state. This method has the advantage that it is possible to obtain cost benefits while maintaining the battery characteristics by preventing degradation due to a solvent.

In this specification, "substantially free from a liquid medium" means that the content of a liquid medium is 1% by mass or less with respect to the total amount of the secondary battery mixture. Examples of the liquid medium include water, a low-polarity hydrocarbon solvent such as, an ether compound, an alcohol, an ionic liquid, a carbonate, an aliphatic hydrocarbon (low-polarity solvent such as heptane or xylene), an isoparaffinic hydrocarbon compound, and a petroleum fraction (gasoline (C4-C10), naphtha (C4-C11), kerosene/paraffin (C10-C16), and mixtures thereof), preferred examples include a low-polarity solvents such as heptane or xylene, an ionic liquid, isoparaffinic hydrocarbon compound, and a petroleum fraction.

### (Production method)

The method for producing a secondary battery mixture sheet of the present disclosure preferably uses a raw material composition obtained by mixing the components described above, and forms this raw material composition into a sheet. When forming the sheet, a drying process can be omitted, and thus a method in which a shear stress is applied to the raw material composition, which is a powder, either by reducing the amount of liquid medium used or not using a liquid medium at all, and a slurry is not prepared, is preferable. Further, a small amount of solvent may be added as a lubricant to reduce the load on the device. The solvent is preferably an organic solvent, and the amount of solvent contained is, with respect to the raw material composition, preferably 10% by mass or less, more preferably 5% by mass or less, and further preferably 3% by mass or less.

The method for producing the secondary battery mixture sheet of the present disclosure is not limited, and an example of a specific method thereof is as follows.

The present disclosure also relates to a method for producing a secondary battery mixture sheet including:
a step (1) of applying a shear force while mixing a raw material composition including a fibrillatable resin and battery material particles having a d50 of 20 µm or more;
a step (2) of forming the secondary battery mixture obtained in step (1) into a bulk shape; and
a step (3) of rolling the bulk-shape secondary battery mixture obtained in step (2) into a sheet shape,
wherein 3% by mass or more of the battery material particles relative to the fibrillatable resin is used.

In the above steps, prior to step (1), step (0) may be performed as a mixing step at a temperature of 19°C or lower in order to further improve material dispersibility. The resultant secondary battery mixture is present in an undetermined form in which the battery material particles, fibrillatable resin, and the like are simply mixed. Examples of specific mixing method include a method of mixing using a W-type mixer, a V-type mixer, a drum-type mixer, a ribbon mixer, a conical screw-type mixer, a single-screw kneader, a planetary mixer, a Henschel mixer, a high-speed mixer, and the like.

In step (0), the mixing conditions may be appropriately set in terms of rotation speed and mixing time. For example, the rotation speed is preferably 500 rpm or less. The rotation speed is in the range of preferably 400 rpm or less, more preferably 300 rpm or less, and further preferably 200 rpm or less. The lower limit is preferably 20 rpm or more, more preferably 30 rpm or more, and further preferably 40 rpm or more. If the rotation speed is less than the above range, the mixing takes time, which affects productivity. On the other hand, if the rotation speed exceeds the above range, excessive fibrillation may occur, resulting in an electrode mixture sheet with inferior strength. Further, by kneading at a temperature of 19°C or lower, the raw material composition can be dispersed while suppressing fibrillation.

At the stage of applying a shear force while mixing the raw material composition in step (1), the resultant secondary battery mixture is present in an undetermined form in which the battery material particles, fibrillatable resin, and the like are simply mixed. Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, a Henschel mixer, high-speed mixer, and the like.

In step (1), the mixing conditions may be appropriately set in terms of rotation speed and mixing time. For example, the number of revolutions is preferably 15,000 rpm or less. The number of revolutions is in the range of preferably 10 rpm or more, more preferably 1,000 rpm or more, and further preferably 3,000 rpm or more, and is in the range of preferably 12,000 rpm or less, more preferably 11,000 rpm or less, and further preferably 10,000 rpm or less. If the number of rotations is less than the above range, the mixing takes time, which affects productivity. On the other hand, if the number of rotations exceeds the above range, excessive fibrillation may occur, resulting in an electrode mixture sheet with inferior strength.

Forming into a bulk shape means forming the secondary battery mixture into one mass in the above step (2) .

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter of the cross section or the minimum size is 10,000 µm or more, and more preferably 20,000 µm or more.

Examples of the specific rolling method in step (3) include a method of rolling using a roll press machine, a flat plate press machine, a calender roll machine, or the like.

Further, it is also preferable to have, after the step (3), a step (4) of applying a larger load to the obtained roll sheet and rolling it into a thinner sheet. It is also preferable to repeat step (4). In this way, the flexibility is improved by rolling the sheet little by little in stages instead of thinning the roll sheet all at once.

The number of times that step (4) is carried out is preferably 2 or more and 10 or less, and more preferably 3 or more and 9 or less.

A specific rolling method is to, for example, rotate two or a plurality of rolls and pass the roll sheet between the rolls to form a thinner sheet.

Further, from the viewpoint of adjusting the fibril diameter, it is preferable to have, after step (3) or step (4), a step (5) of coarsely crushing the roll sheet, then again forming into a bulk shape, and rolling into a sheet. It is also preferable to repeat step (5). The number of times that step (5) is carried out is preferably 1 time or more and 12 times or less, and more preferably 2 times or more and 11 times or less.

In step (5), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (3) or step (4) into another form for rolling into a sheet shape in the next step, and may include a case of simply folding a roll sheet.

Step (4) may be performed after step (5), or may be performed repeatedly.

Further, uniaxial stretching or biaxial stretching may be carried out in step (2) as well as steps (3), (4), and (5).

In addition, the fibril diameter (median value) can also be adjusted by the degree of coarse crushing in step (5) .

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling. The steps (1) to (5) are preferably performed at a temperature of 30°C or higher, and more preferably 60°C or higher.

The temperature conditions for the above steps (0) to (5) are such that in the above step (0), the processing temperature is preferably 19°C or lower, and in the above steps (1) to (5), the processing temperature is preferably 30°C or higher, and more preferably 60°C or higher. By using such a temperature range, it is possible to process the materials into a desired sheet shape in a shorter time.

As described above, the PTFE powder becomes fibrillated by applying shear force. In order to have a fibrous structure with a fibril diameter (median value) of 100 nm or less, if the shear stress is excessive, excessive fibrillation may proceed, which impairs flexibility. Further, if shear stress is weak, strength may not be sufficient. For this reason, during mixing and rolling, the resin is rolled and stretched into a sheet by applying an appropriate shear stress to the PTFE to promote fibrillation, whereby a fibrous structure with a fibril diameter (median value) of 100 nm can be obtained.

As described above, the secondary battery mixture sheet of the present disclosure can be any of a sheet for a positive electrode, a sheet for a negative electrode, and a sheet for a solid-state electrolyte layer. When used as a mixture sheet for a positive electrode or a sheet for a negative electrode, in the production of the secondary battery mixture sheet, the positive electrode active material or negative electrode active material may be mixed with the fibrillatable resin.

The positive electrode and negative electrode are described below.

### (Positive electrode)

In the present disclosure, it is preferable that the positive electrode is constructed from a current collector and the above-described sheet for a positive electrode.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The positive electrode may be produced according to a conventional method. For example, a method of laminating the sheet for a positive electrode and the current collector with an adhesive between them and drying the laminate can be used.

The density of the sheet for a positive electrode is preferably 2.0 g/cm³ or more, more preferably 2.1 g/cm³ or more, and further preferably 2.3 g/cm³ or more, and preferably 4.0 g/cm³ or less, more preferably 3.9 g/cm³ 3 or less, and further preferably 3.8 g/cm³ or less. If the density exceeds this range, the electric conductivity between the active materials decreases, the battery resistance increases, and a high output may not be obtained. If the density is lower than this range, the obtained battery may be hard, tend to crack, have a low active material content, and have a low capacity.

The thickness of the positive electrode is not limited, but from the viewpoint of a high capacity and a high output, the thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### (Negative electrode)

In the present disclosure, it is preferable that the negative electrode is constructed from a current collector and the above-described sheet for a negative electrode.

Examples of the material of the current collector for the negative electrode include metals such as copper, nickel, titanium, tantalum, stainless steel, and nickel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

The negative electrode may be produced according to a conventional method. For example, a method of laminating the sheet for a negative electrode and the current collector with an adhesive between them and drying the laminate can be used.

The density of the sheet for a negative electrode is preferably 1.3 g/cm³ or more, more preferably 1.4 g/cm³ or more, and further preferably 1.5 g/cm³ or more, and preferably 2.0 g/cm³ or less, more preferably 1.9 g/cm³ or less, and further preferably 1.8 g/cm³ or less. If the density exceeds this range, the penetration of the solid-state electrolyte near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the metal foil thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

### (Secondary battery)

The present disclosure also relates to a secondary battery using the above-described secondary battery mixture sheet.

Preferably, the secondary battery is a lithium ion battery. Further, the secondary battery may be a solid-state battery or a secondary battery containing a liquid electrolyte.

The secondary battery of the present disclosure is a secondary battery that includes the above-described secondary battery mixture sheet of the present disclosure as a positive electrode. Here, the negative electrode and the solid-state electrolyte layer are not limited, and any known negative electrode and the solid-state electrolyte layer can be used.

The separator and the battery case used in the secondary battery according to the present disclosure will be described in detail below.

The secondary battery of the present disclosure may be produced by, for example, first laminating the positive electrode, the solid-state electrolyte layer sheet, and the negative electrode in this order, and then pressing to form a secondary battery.

It is preferable to use the secondary battery mixture sheet of the present disclosure because this enables a secondary battery to be produced with less moisture in the system, and a secondary battery with a good performance can be obtained.

### (Secondary battery using electrolytic solution)

An electrode produced using the secondary battery mixture sheet of the present disclosure can be used as a positive electrode or a negative electrode in various secondary batteries using an electrolytic solution. The secondary battery is a battery using a non-aqueous electrolytic solution, and examples thereof can include a lithium ion battery.

### (Electrolytic solution)

As the non-aqueous electrolytic solution, a known electrolyte salt dissolved in a known organic solvent for dissolving the electrolyte salt can be used.

Examples of the organic solvent for the dissolving electrolyte salt include, but are not limited to, one or more known hydrocarbon-based solvents, such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorinated solvents, such as fluoroethylene carbonate, fluoroether, and fluorinated carbonate.

Examples of the electrolyte salt include LiClO₄, LiAsF₆, LiBF₄, LiPF₆, LiN(SO₂CF₃)₂, LiN(SO₂C₂F₅)₂, and the like, and from the viewpoint of having good cycle characteristics, LiPF₆, LiBF₄, LiN(SO₂CF₃)₂, LiN(SO₂C₂F₅)₂, or a combination thereof is particularly preferred.

The concentration of the electrolyte salt needs to be 0.8 mol/liter or more, and more preferably 1.0 mol/liter or more. The upper limit depends on the organic solvent for dissolving the electrolyte salt, but is usually 1.5 mol/liter or less.

### (Battery design)

The electrode mixture group may have a laminated structure in which the above-described positive electrode and negative electrode are interposed with a separator in between, or may have a structure in which the above-described positive electrode and negative electrode are spirally wound with the separator interposed therebetween.

### (Separator)

The material and shape of the separator are not limited as long as they are stable to the electrolytic solution and have excellent liquid retention properties, and known materials can be used. For example, resin, glass fiber, inorganic materials, and the like may be used, and it is preferable to use a porous sheet, nonwoven fabric, or the like having excellent liquid retention properties.

As the material of the resin or glass fiber separator, for example, a polyolefin such as polyethylene or polypropylene, an aromatic polyamide, PTFE, polyethersulfone, a glass filter, or the like can be used. These materials may be used alone or in combination of two or more in any combination and ratio, for example, as a polypropylene/polyethylene two-layer film or a polypropylene/polyethylene/polypropylene three-layer film.

Among these, from the viewpoint of having good electrolytic solution permeability and a good shut-down effect, the separator is preferably a porous sheet, nonwoven fabric, or the like made from a polyolefin such as polyethylene or polypropylene as a raw material.

Further, when using a porous material such as a porous sheet or a nonwoven fabric as the separator, the porosity of the separator may be any porosity, but is usually 20% or more, preferably 35% or more, and more preferably 45% or more. Further, the porosity is usually 90% or less, preferably 85% or less, and more preferably 75% or less. If the porosity is too much lower than the above range, membrane resistance tends to increase and the rate characteristics tend to deteriorate. Moreover, if the porosity is too much higher than the above range, the mechanical strength of the separator tends to decrease and the insulating property tends to decrease.

Further, the average pore size of the separator is also any pore size, but it is usually 0.5 µm or less, preferably 0.2 µm or less, and usually 0.05 µm or more. If the average pore size exceeds the above range, short circuits tend to occur. If the average pore size is below the above range, the film resistance may increase and the rate characteristics may deteriorate.

On the other hand, as the inorganic material, for example, oxides such as alumina and silicon dioxide, nitrides such as aluminum nitride and silicon nitride, and sulfates such as barium sulfate and calcium sulfate are used, and a material in the form of particles or fibers is used.

The separator is in the form of a thin membrane of a nonwoven fabric, a woven fabric, a microporous film, and the like. It is preferred to use a thin membrane having a pore size of 0.01 to 1 µm and a thickness of 5 to 50 µm. In addition to the independent thin membrane configuration described above, a separator can be used in which a composite porous layer containing the above-described inorganic particles is formed on the surface layer of the positive electrode and/or negative electrode using a resin binder.

For example, a porous layer may be formed on both sides of the positive electrode using alumina particles having a 90% particle size of less than 1 µm and a fluororesin as a binder.

The material of exterior case is not limited as long as it is stable to the electrolytic solution used. Specifically, a metal such as a nickel-plated steel plate, stainless steel, aluminum or an aluminum alloy, or a magnesium alloy, or a laminated film of a resin and aluminum foil is used. From the viewpoint of reducing weight, it is preferred to use a metal of aluminum or an aluminum alloy, or a laminate film.

Examples of exterior cases that use a metal include a hermetically sealed structure obtained by welding metal pieces together by laser welding, resistance welding, or ultrasonic welding, and a caulked structure obtained by caulking the metal pieces together using a resin gasket. Examples of exterior cases that use a laminate film include a hermetically sealed structure obtained by heat-sealing resin layers together. In order to improve sealability, a resin different from the resin used for the laminate film may be interposed between the resin layers. In particular, when using a sealed structure obtained by heat-sealing a resin layer via a current collector terminal, the metal and resin are joined together, and so it is preferred to use as the interposing resin a resin having a polar group or a modified resin having a polar group introduced therein.

The shape of the secondary battery may be any shape, and examples thereof include a cylindrical shape, a square shape, a laminate shape, a coin shape, a large-sized shape, and the like. The shape and configuration of the positive electrode, negative electrode, and separator can be changed in accordance with the shape of each battery.

### Examples

Hereinafter, the present disclosure will be specifically described based on examples.

In the following examples, "parts" and "%" represent "parts by mass" and "% by mass", respectively, unless otherwise specified.

### [Production Example 1]

At the point when 367 g of TFE (35.6% by mass with respect to the total polymerization amount of TFE of 1032 g) was consumed from the start of polymerization, an aqueous solution of 12.0 mg of hydroquinone as a radical scavenger dissolved in 20 ml of water was charged under pressure with TFE (concentration 4.0 ppm with respect to the aqueous medium). Polymerization was continued thereafter, and when the polymerized amount of TFE reached 1,000 g from the start of polymerization, the supply of TFE was stopped, gas in the system was immediately released to achieve normal pressure, the polymerization reaction ended, and an aqueous dispersion of polytetrafluoroethylene (solid content 31.2% by mass) was obtained. The resulting aqueous dispersion of polytetrafluoroethylene was diluted to a solid content concentration of 15%, and gently stirred in a container equipped with a stirrer in the presence of nitric acid to solidify the polytetrafluoroethylene. The solidified polytetrafluoroethylene was separated and dried at 160°C for 18 hours to obtain powdered PTFE-1.

**[Table 1]**

| Produced PTFE | Standard specific gravity | Moisture content (ppm) after drying |
|---|---|---|
| PTFE-1 | 2.16 | <250 |

The moisture content is measured by the following method.

### [Measurement of moisture content]

The powdered PTFE was dried in a vacuum dryer at 50°C for 1 hour before use. Using a Karl Fischer moisture meter (ADP-511/MKC-510N, manufactured by Kyoto Electronics Industry Manufacturing Co., Ltd.) equipped with a boat-type moisture vaporizer, the moisture content of the PTFE after the vacuum drying was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

### (Example 1)

### <Preparation of mixture sheet>

Li(Ni_{0.5}Mn_{0.3}Co_{0.2})O₂ (NMC532) having a d50 = 7 µm as an active material, carbon black having d50 = 0.04 µm as a conductive agent, powdered PTFE-1 as a binder, and artificial graphite having a d50 = 23 µm were weighed and mixed with a high speed mixer (500 rpm, 1 minute). The stirring was performed by cooling the container to 10°C. After that, the mixture was stirred with a high-speed mixer (10000 rpm, 3 minutes) to obtain a mixture. The stirring was performed by heating the container to 60°C. The mass ratio of the mixture was NMC532:powdered PTFE-1:carbon black:artificial graphite = 95:2:2.7:0.3.

30g of the obtained mixture was weighed, and rolled with a metal roll heated to 80°C. The mixture, bulk, or mixture sheet obtained from the outlet was again rolled with the metal roll repeatedly between 1 and 8 times to produce samples that had been rolled a different number of times. All rolling steps were performed with the same distance between rolls and under the same load.

### (Example 2)

A mixture sheet was obtained by the same steps as in Example 1, except that the mass ratio of the mixture was NMC532:powdered PTFE-1:carbon black:artificial graphite = 95:2:2.4:0.6.

### (Example 3)

A mixture sheet was obtained by the same steps as in Example 1, except that the mass ratio of the mixture was NMC532:powdered PTFE-1:carbon black:artificial graphite = 95:2:2.1:0.9.

### (Example 4)

Instead of artificial graphite, an active material LiCoO₂ (LCO) was classified and used at d50 = 22 µm. The mass ratio of the mixture was NMC532:powdered PTFE-1:carbon black:LCO = 94.4:2:3:0.6. Expect for that, a mixture sheet was obtained by the same steps as in Example 1.

### (Example 5)

A mixture sheet was obtained by the same steps as in Example 4, except that the mass ratio of the mixture was NMC532:powdered PTFE-1:carbon black:LCO = 93.8:2:3:1.2.

### (Example 6)

A mixture sheet was obtained by the same steps as in Example 4, except that the mass ratio of the mixture was NMC532:powdered PTFE-1:carbon black:LCO = 93.2:2:3:1.8.

### (Comparative Example 1)

A mixture sheet was obtained by the same steps as in Example 4, except that the mass ratio of the mixture was NMC532:powdered PTFE-1:carbon black = 95:2:3.

Various evaluations was carried out by the following methods.

### [PTFE fibril diameter (median value)]

(1) Using a scanning electron microscope (Model S-4800, manufactured by Hitachi, Ltd.), an enlarged photograph (7,000x) of the sheet-shaped solid-state electrolyte layers was taken to obtain an image.
(2) Two lines equidistant from each other were drawn on the image in the horizontal direction to divide the image into three equal parts.
(3) The diameter of each PTFE fiber on the upper straight line was measured at three locations, and the average value was taken as the PTFE fiber diameter. The three locations to be measured were the intersection between the PTFE fiber and the straight line, and the locations 0.5 µm above and below the intersection (PTFE primary particles not formed into fibrils are excluded).
(4) The task of (3) above was then carried out for all the PTFE fibers on the lower straight line.
(5) Starting from the first image, the sheet-shaped solid-state electrolyte layers was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

### [Number of times until sheet was formed]

A sample prepared by rolling 1 to 8 times was visually confirmed. By repeating the rolling, the bulk began to increase and the number of times rolling was performed until a mixture sheet having an area of 25 cm² or more was formed was taken as the evaluation score.

### [Strength measurement]

Using a tensile tester (Autograph AGS-X series AGS-100NX, manufactured by Shimadzu Corporation), the measurement was performed on a strip-shaped mixture test piece having a width of 4 mm under conditions of 100 mm/min. The chuck-to-chuck distance was 30 mm. Displacement was applied until breakage, and the maximum stress obtained in the measured results was taken as the strength of each sample. In Table 2, Comparative Example 1 was standardized as 100%. The mixture test piece was cut out from a mixture sheet that had been rolled eight times. The test was carried out five times, and the average value was taken as the strength.

### [X-ray CT scan]

The X-ray CT scan for confirming the number of particles A and particles B was performed by acquiring a 3D image of the mixture and analyzing the image using analysis software. In addition, the percentage by volume of the particles A and the particles B was measured by calculating the volume occupied by each of the fibrillatable resin, the particles A, and the particles B in the space based on a three-dimensional image of the results obtained by the X-ray CT scan.

The more specific method was as follows.

First, for the mixture before forming, a sample was weighed into a metal mold having a diameter of 10 mm, and a pressure of 12 KN was applied to form the mixture into pellets having a thickness of 1 mm or less. These were used as measurement samples. For the formed mixture sheet, the mixture sheet was cut to a size of at least 5 mm × 5 mm to prepare a measurement sample of at least 5 mm × 5 mm × 1 mm. When the thickness of a measurement sample was 1 mm or less, the measurement sample was made to have a thickness of 1 mm or more by overlapping the measurement samples.

Next, the measurement sample was placed in the sample fixing device of an X-ray CT scan (manufactured by Rigaku Co., Ltd., high-resolution 3D X-ray microscope nano3DX), and the center position of the sample and the focal length of the measurement X-ray were set to 20 mm. Finally, an area of 1 mm × 1 mm × 1 mm was scanned with an X-ray CT scan and analyzed using analysis software.

### [Confirmation of the average number of particles A]

The obtained images were saved on a computer in TIFF format, read with image analysis software ImageJ, and three-dimensionally reconstructed. After partial binarization of the portions having a similar contrast, the number of particles having a particle size of 20 µm or more present in an area of 500 µm × 500 µm × 500 µm was counted using the analyze particle function. The average number of particles per 125×10⁶ µm³ was calculated by counting the particles at 5 arbitrary non-overlapping areas. The average number of particles obtained here was multiplied by 8 to obtain the average number of particles per 1 mm³. The count detected particles having a major axis of 20 µm or more, and missed particles at the boundary of the measurement area. Particles having a particle size of less than 20 µm were not counted. Further, the average number of particles was rounded off to the nearest whole number.

### [Confirmation of the average number of particles B]

The obtained images were saved on a computer in TIFF format, read with image analysis software ImageJ, and three-dimensionally reconstructed. After partial binarization of the portions having a similar contrast, the number of particles having a particle size of 0.5 µm or more and less than 20 µm present in an area of 500 µm × 500 µm × 500 µm was counted using the analyze particle function. The average number of particles per 125×10⁶ µm³ was calculated by counting the particles at 5 arbitrary non-overlapping areas. The average number of particles obtained here was multiplied by 8 to obtain the average number of particles per 1 mm³. The count detected particles having a major axis of 0.5 µm or more and less than 20 µm, and missed particles at the boundary of the measurement area. Particles having a particle size of less than 0.5 µm were not counted. Further, the average number of particles was rounded off to the nearest whole number.

**[Table 2]**

| | Particles A | | | Particles B | | PTFE | Evaluation | |
|---|---|---|---|---|---|---|---|---|
| | % by Volume relative to particles B | % by Volume relative to PTFE | Number of particles (number/mm³) | % by Volume relative to PTFE | Number of particles. (number/mm³) | Fibril diameter [nm] | Number of times until sheet was formed | Tensile strength |
| Example 1 | 0.3% | 7% | 456 | 2299% | 4961248 | 23 | 5 | 120 |
| Example 2 | 0.6% | 14% | 912 | 2283% | 4960888 | 35 | 4 | 255 |
| Example 3 | 0.9% | 22% | 1816 | 2267% | 4940192 | 43 | 3 | 324 |
| Example 4 | 0.4% | 8% | 504 | 2295% | 4910024 | 24 | 5 | 132 |
| Example 5 | 0.7% | 15% | 1104 | 2282% | 4890096 | 34 | 4 | 248 |
| Example 6 | 0.9% | 23% | 2096 | 2265% | 4889992 | 48 | 3 | 330 |
| Comparative Example 1 | - | - | - | 2315% | 5330104 | 15 | 6 | 100 |

From the results in Table 2, it was found that the sheet formability of the Examples was such that the sheets could be formed in a smaller number of times than the Comparative Example, and that by mixing the particles A, fibrillation was promoted and the sheet could be formed easily. Further, since the obtained sheet had excellent tensile strength, it was clear that the sheet had sufficient strength.

### Industrial Applicability

The secondary battery mixture of the present disclosure and the secondary battery mixture sheet containing the same can be used to produce a solid-state secondary battery or a secondary battery containing a liquid electrolytic solution.

## Claims

1. A secondary battery mixture, comprising:
a fibrillatable resin; and
particles A having a particle size of 20 µm or more, wherein
the secondary battery mixture comprises on average 80 or more of the particles A per 1 mm³ of the mixture.

2. The secondary battery mixture according to claim 1, wherein the particles A are at least one selected from the group consisting of an electrode active material, a solid-state electrolyte, a carbon material, and a non-fibrillatable resin.

3. The secondary battery mixture according to claim 1 or 2, wherein the particles A account for 1 to 4,800% by volume relative to the fibrillatable resin.

4. The secondary battery mixture according to any one of claims 1 to 3, wherein the secondary battery mixture further comprises particles B having a particle size of 0.5 µm or more and less than 20 µm, wherein
the secondary battery mixture comprises 80,000 or more particles B per 1 mm³ of the mixture.

5. The secondary battery mixture according to claim 4, wherein the particles B are at least one selected from the group consisting of an electrode active material, a solid-state electrolyte, a carbon material, and a non-fibrillatable resin.

6. The secondary battery mixture according to claim 4 or 5, wherein the particles B account for 400 to 50,000% by volume relative to the fibrillatable resin.

7. The secondary battery mixture according to any of claims 4 to 6, wherein the particles A are fewer than the particles B by volume ratio.

8. The secondary battery mixture according to any of claims 1 to 7, wherein the fibrillatable resin is a polytetrafluoroethylene resin.

9. The secondary battery mixture according to claim 8, wherein the polytetrafluoroethylene resin has a fibrous structure with a fibril diameter (median value) of 100 nm or less.

10. The secondary battery mixture according to any of claims 1 to 9, wherein the secondary battery mixture is substantially free of a liquid medium.

11. A secondary battery mixture sheet comprising the secondary battery mixture according to any one of claims 1 to 10.

12. A method for producing a secondary battery mixture sheet comprising:
a step (1) of applying a shear force while mixing a raw material composition including a fibrillatable resin and battery material particles having a d50 of 20 µm or more;
a step (2) of forming the secondary battery mixture obtained in step (1) into a bulk shape; and
a step (3) of rolling the bulk-shape secondary battery mixture obtained in step (2) into a sheet shape,
wherein 3% by mass or more of the battery material particles relative to the fibrillatable resin is used.

13. The method for producing a secondary battery mixture sheet according to claim 12, comprising, prior to the step (1), a step (0) of mixing a raw material at a temperature of 19°C or lower.

14. A secondary battery comprising the secondary battery mixture sheet according to claim 11.
